(19) **Europäisches Patentamt European Patent Office Office européen des brevets**

(11) **EP 4 478 248 A1**

(12) **EUROPÄISCHE PATENTANMELDUNG**

(43) Veröffentlichungstag:
**18.12.2024  Patentblatt 2024/51**

(21) Anmeldenummer: **23179012.2**

(22) Anmeldetag: **13.06.2023**

(51) Internationale Patentklassifikation (IPC):
**G06N 3/02** *(2006.01)*        **G06N 3/098** *(2023.01)*

(52) Gemeinsame Patentklassifikation (CPC):
**G06N 3/098;** G06N 3/0455

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Siemens AG Österreich**
**1210 Wien (AT)**

(72) Erfinder:
• **Eder, Jana**
**1180 Wien (AT)**

• **Hießl, Thomas**
**1050 Wien (AT)**
• **Holly, Stephanie**
**2000 Stockerau (AT)**
• **Schall, Daniel**
**2020 Hollabrunn (AT)**
• **Ungersböck, Michael**
**2831 Gleißenfeld (AT)**

(74) Vertreter: **Siemens Patent Attorneys**
**Postfach 22 16 34**
**80506 München (DE)**

(54) **COMPUTER-IMPLEMENTIERTES VERFAHREN UND SYSTEM ZUM BETRIEB EINES TECHNISCHEN GERÄTS IN EINEM KLIENTEN-SERVER-SYSTEM**

(57)    Computer-implementiertes Verfahren zum Betrieb eines technischen Geräts (TD1) durch ein System, wobei folgende Schritte ausgeführt werden:
a) Bereitstellen eines trainierten Basis-Modells (BM) für den Betrieb des technischen Geräts (TD1-TD3) an den Server (S),
b) Bereitstellen eines vordefinierten Wertebereichs für einen zulässigen Fehler des Basis-Modells (BM) an den Server (S),
c) Übermitteln des Basis-Modells (BM) vom Server (S) an den ersten Klienten (C1),
d) Trainieren (TR) des Basis-Modells (BM) durch den ersten Klienten (C1), und Übermitteln als erstes Klienten-Modell (CM1) an den Server (S),
e) Berechnen eines ersten statistischen Fehler-Indikators für das erste Klienten-Modell (CM1), durch den Server (S),
f) Prüfen (PR), ob der erste statistische Fehler-Indikator innerhalb des vordefinierten Wertebereichs liegt, durch den Server (S),
I. Wenn Ja, dann Aggregieren des ersten Klienten-Modells (CM1) in das Basis-Modell (BM) als globales Modell (GM),
II. Wenn Nein, Benachrichtigen (FB) des ersten Klienten (C1), dass das erste Klienten-Modell (CM1) in der Modell-Bildung nicht verwendet wurde,

g) Bereitstellen des globalen Modells (GM) an den ersten Klienten (C1) als lokales Modell (LM), und Betreiben des technischen Geräts (TD1) mit dem lokalen Modell (LM).

FIG 2

**Beschreibung**

*Unabhängig vom grammatikalischen Geschlecht eines bestimmten Begriffes sind Personen mit männlicher, weiblicher oder anderer Geschlechteridentität mit umfasst.*

Die Erfindung betrifft ein computer-implementiertes Verfahren und ein System zum Betrieb eines technischen Geräts durch ein System, umfassend einen Server und einen ersten Klienten, mit einem Modell auf Basis künstlicher Intelligenz.

Die Erfindung betrifft ferner ein Computer-Programmprodukt.

Federated Learning (kurz FL) ist eine Technik des maschinellen Lernens, bei der ein Algorithmus, wie ein neuronales Netzwerk, über mehrere dezentrale Edge-Geräte als Klient oder Server mit lokalen Datenproben trainiert wird, ohne die Daten selbst auszutauschen.

Dadurch wird eine Anonymität der Daten ermöglicht, was eine Zusammenarbeit verschiedener Industriepartner untereinander erleichtert, denn es müssen keine Rohdaten weitergegeben werden, aber sehr wohl anonymisierte Daten oder Abstraktionen davon. Es können somit "machine learning"-Modelle (kurz ML) gemeinsam trainiert werden, ohne die Daten zu offenbaren.

Allerdings sind die Industrieteilnehmer nicht immer mit den Anforderungen an maschinelles Lernen und Daten vertraut.

Dies kann dazu führen, dass ein Klient nur sehr geringe Auswirkungen auf die Gesamtleistung des Modells hat.

Wenn ein Klient beispielsweise über zu wenige Daten verfügt, könnte dieser versuchen, diese mit einer Datenerweiterungstechnik zu erhöhen, welche jedoch möglicherweise unzureichend ist.

Dies kann in weiterer Folge jedoch die Gesamtleistung des Modells verschlechtern.

Außerdem kann die Datenqualität einzelner Klienten schlecht sein oder nicht zur Datenverteilung anderer Klienten passen.

Daher ist es wichtig, den Low-Performer-Kunden zu identifizieren und dem Kunden hilfreiches Feedback zu geben, dass er derzeit ein leistungsschwacher Kunde ist und dass es Schwierigkeiten mit dem Datensatz gibt.

Idealerweise sollten mögliche Fehlerquellen aufgezeigt werden, damit es dem Klienten erlaubt wird, seine jeweiligen Daten zu verbessern.

Eine Fehlerquelle eines Klienten mit schlechter Leistung (engl. "low performer client") ist ein Klient, welcher nicht über genügend Daten verfügt, um am föderierten Lernen teilzunehmen, und eine falsche Datensatzgröße angegeben wird.

Beispielsweise kann ein Server von am föderierten Lernen teilnehmenden Klienten ein Datensatzgröße von mindestens 100 Elementen beziehungsweise Testdatensätze fordern.

Der Klient kann entweder falsche Informationen über die Größe seines Datensatzes angeben oder er kann die Daten einfach erweitern und synthetisch eine größere Zahl erzeugen, um die Server-Anforderungen zu erfüllen und am System teilnehmen zu können. Das kann dazu führen, dass das Modell des Klienten an die entsprechenden Klient-Daten nicht gut angepasst ist.

Bei der unerwünschten "Modellvergiftung" (engl. "model poisoning") gibt ein Klient absichtlich falsche Daten in das Modell ein, so dass der Föderationsprozess gestört wird und ein negativer Wissenstransfer stattfindet. Dies verschlechtert das Modell auf dem Server und alle Teilnehmer und wirkt sich negativ auf alle Teilnehmer aus.

Bei einem ebenfalls unerwünschten "men-in-the-middle"-Angriff können Außenstehende sogenannte "poisoning"-Angriffe durchführen, wenn die Kommunikationsverbindung zwischen einem Klienten und dem zentralen Knoten beziehungsweise Server verwundbar ist, indem sie die Kommunikation zwischen einigen Benutzern und den zentralen Knoten abfangen. Anschließend kann der Angreifer im Namen legitimer Benutzer schädliche Modellaktualisierungen an den zentralen Knoten senden, beziehungsweise Verwendung möglicherweise manipulierter Daten erkennen.

Derzeit konzentriert sich die meiste Literatur auf die Erkennung bösartiger Updates (auch als "poisoning" bezeichnet), die mithilfe der Kosinus-Ähnlichkeit von Daten gelöst wird, oder auf das Entfernen der bösartigen Updates über ein Anomalie-Erkennungsmodell.

Weiterhin werden auch Einbettungen anderer Modelle oder deren jeweilige Konstruktionsfehler verwendet. Manchmal wird ein zweites Modell trainiert und gesendet (wie z.B. ein Autoencoder). Dies erfordert jedoch den Zugriff auf die Daten eines Mandanten oder eines zweiten Modells.

Es ist daher Aufgabe der Erfindung Klienten mit schlechter Leistung in einem föderierten System zu identifizieren und auszusparen, und dadurch ein Gesamt-Modell zu verbessern.

Die erfindungsgemäße Aufgabe wird durch ein Verfahren eingangs genannter Art gelöst, wobei folgende Schritte ausgeführt werden:

a) Bereitstellen eines trainierten Basis-Modells für den Betrieb des technischen Geräts an den Server,
b) Bereitstellen eines vordefinierten Wertebereichs für einen zulässigen Fehler des Basis-Modells an den Server,
c) Übermitteln des Basis-Modells vom Server an den ersten Klienten,
d) Trainieren des Basis-Modells durch den ersten Klienten, und Übermitteln als erstes Klienten-Modell an den Server,
e) Berechnen eines ersten statistischen Fehler-Indikators für das erste Klienten-Modell, durch den Server,
f) Prüfen, ob der erste statistische Fehler-Indikator innerhalb des vordefinierten Wertebereichs liegt, durch den Server,

    I. Wenn Ja, dann Aggregieren des ersten Klienten-Modells in das Basis-Modell als globales Modell,
    II. Wenn Nein, optionales Benachrichtigen des ersten Klienten, dass das erste Klienten-Modell in der Modell-Bildung nicht verwendet wurde,

    g) Bereitstellen des globalen Modells an den ersten Klienten als lokales Modell, und Betreiben des technischen Geräts mit dem lokalen Modell.

Dadurch wird die Erkennung eines Low-Performer-Clients erreicht und hilfreiches Feedback zu den Datenanforderungs für den jeweiligen Klienten bereitgestellt.

Das System verwendet und aggregiert daher nur Klienten-Modelle, welche vorbestimmten Anforderungen erfüllen.

Das Berechnen eines statistischen Fehler-Indikators kann durch Anwenden von einer oder mehrerer statistischen Funktionen über die Zeit oder auch über mehrere Klienten hinweg erfolgen, also durch Bestimmen von quantitativen Informationen mithilfe von Methoden zur Analyse empirischer Daten.

Durch das Verfahren ist es möglich innerhalb eines FL-Systems anhand von Qualitätsvorgaben für ein globales Modell einzelne Klienten bei unzureichender Datenqualität vom föderierten Lernen auszuschließen, beispielsweise für Einzelfälle, temporär oder dauerhaft, um die Gesamtqualität des globalen Modells nicht ungünstig zu beeinträchtigen.

Gleichzeitig kann der Klient, dessen Datenqualität als unzureichend erkannt wurde, optional eine dementsprechende Rückmeldung erhalten, beispielsweise um ihm Gelegenheit zu geben, die Datenqualität zu verbessern und in einer nachfolgenden Runde des föderierten Lernens wieder im globalen Modell berücksichtigt zu werden.

In einer Weiterbildung der Erfindung ist es vorgesehen, dass der erste statistische Fehler-Indikator durch einen Mittelwert oder ein Konfidenz-Intervall von Parametern des ersten Klienten-Modell gebildet ist.

Das System verwendet und aggregiert daher nur Klienten-Modelle, welche vorbestimmten Anforderungen, beispielsweise an die Daten-Qualität der zugehörigen Klienten erfüllen.

In einer Weiterbildung der Erfindung ist es vorgesehen, dass der erste und/oder der zweite statistische Fehler-Indikator mithilfe eines Dice-Ähnlichkeitskoeffizienten, einer Genauigkeit, einer Präzision oder eines F-Maßes bestimmt wird.

Das System verwendet und aggregiert daher nur Klienten-Modelle, welche vorbestimmten Anforderungen, beispielsweise an die Genauigkeit, die Präzision, etc. erfüllen.

In einer Weiterbildung der Erfindung ist es vorgesehen, dass das System ferner zumindest zwei zweiten Klienten umfasst, und folgende Schritte ausgeführt werden:

    a1) Übermitteln des Basis-Modells vom Server jeweils an die zumindest zwei zweiten Klienten,
    a2) Trainieren des Basis-Modells jeweils durch einen Klienten der zumindest zwei zweiten Klienten, und Übermitteln der jeweiligen trainierten Modelle als jeweiliges zweites Klienten-Modell an den Server,
    a3) Berechnen eines jeweiligen zweiten statistischen Fehler-Indikators für das jeweilige zweite Klienten-Modell, durch den Server,
    a4) Berechnen des Wertebereichs für den zulässigen Fehler des Basis-Modells aus Schritt b) aus den zumindest zwei zweiten statistischen Fehler-Indikatoren, durch den Server.

Dadurch kann auf einfache Weise der vorbestimmte Wertebereich aus Daten anderer Klienten bestimmt werden.

In einer Weiterbildung der Erfindung ist es vorgesehen, dass die zumindest zwei zweiten statistischen Fehler-Indikatoren jeweils durch einen Mittelwert oder ein Konfidenz-Intervall von Parametern des jeweiligen zweiten Klienten-Modells gebildet sind.

In einer Weiterbildung der Erfindung ist es vorgesehen, dass die zumindest zwei zweiten Klienten-Modelle mit dem bereitgestellten Basis-Modell aus Schritt a) aggregiert werden.

Die erfindungsgemäße Aufgabe wird auch durch ein System zum Betrieb eines technischen Geräts gelöst, umfassend einen Server, einen ersten Klienten, mit einem Modell auf Basis künstlicher Intelligenz, wobei die Schritte des erfindungsgemäßen Verfahrens ausgeführt werden.

In einer Weiterbildung der Erfindung ist es vorgesehen, dass ferner zumindest zwei zweite Klienten umfasst sind, und die Schritte des erfindungsgemäßen Verfahrens ausgeführt werden.

Die erfindungsgemäße Aufgabe wird auch durch ein Computer-Programm-Produkt mit darin gespeicherten maschinenlesbaren Anweisungen gelöst, die, wenn sie von einer Verarbeitungseinheit ausgeführt werden, diese veranlassen, das erfindungsgemäße Verfahren auszuführen.

Die Erfindung wird nachfolgend anhand eines in den beigeschlossenen Zeichnungen dargestellten Ausführungsbeispiels näher erläutert. In den Zeichnungen zeigt:

Fig. 1     ein Beispiel für ein Klienten-Server-System,

Fig. 2     schematisch die Abläufe des erfindungsgemäßen Verfahrens,

Fig. 3     ein Ausführungsbeispiel für ein Flussdiagramm des erfindungsgemäßen Verfahrens,

Fig. 4　eine Darstellung für Wertebereiche von Klienten-Modellen,

Fig. 5　ein Ausführungsbeispiel für einen Pseudo-Programmcode für das erfindungsgemäße Verfahren,

Fig. 6　ein Ausführungsbeispiel für einen Pseudo-Programmcode zur Erkennung von Klienten mit niedriger Leistung.

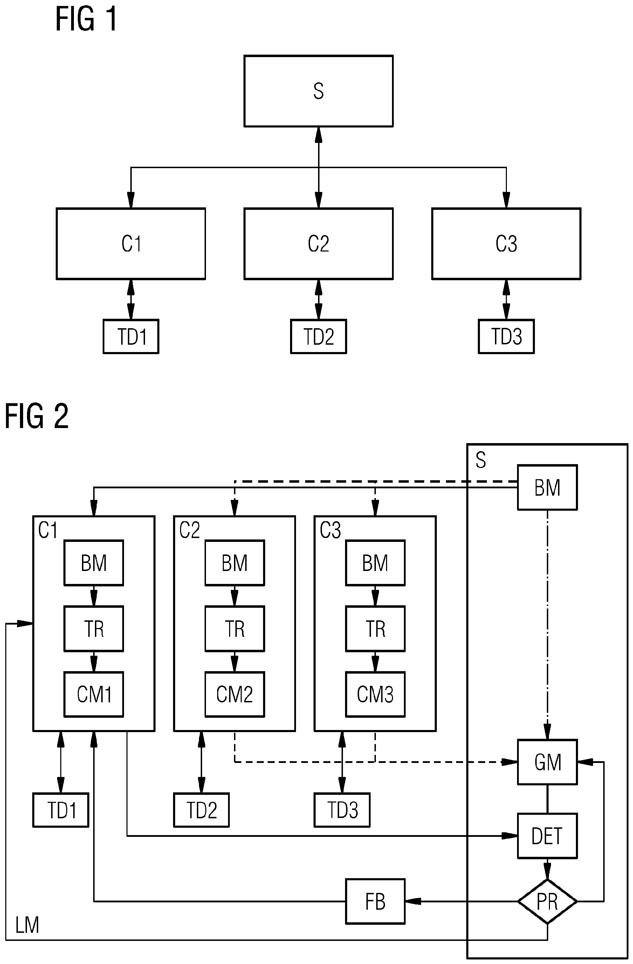

**Fig. 1** zeigt ein Beispiel für ein Klienten-Server-System mit einem Server S, drei verbundenen Klienten C1-C3, welche jeweils mit einem technischen Gerät TD1-TD3 verbunden sind.

Die jeweiligen technischen Geräte TD1-TD3 werden mit einem ML-Modell betrieben.

Das ML-Modell basiert auf föderiertem Lernen, welches zwischen dem Server S und den Klienten C1-C3 erfolgt.

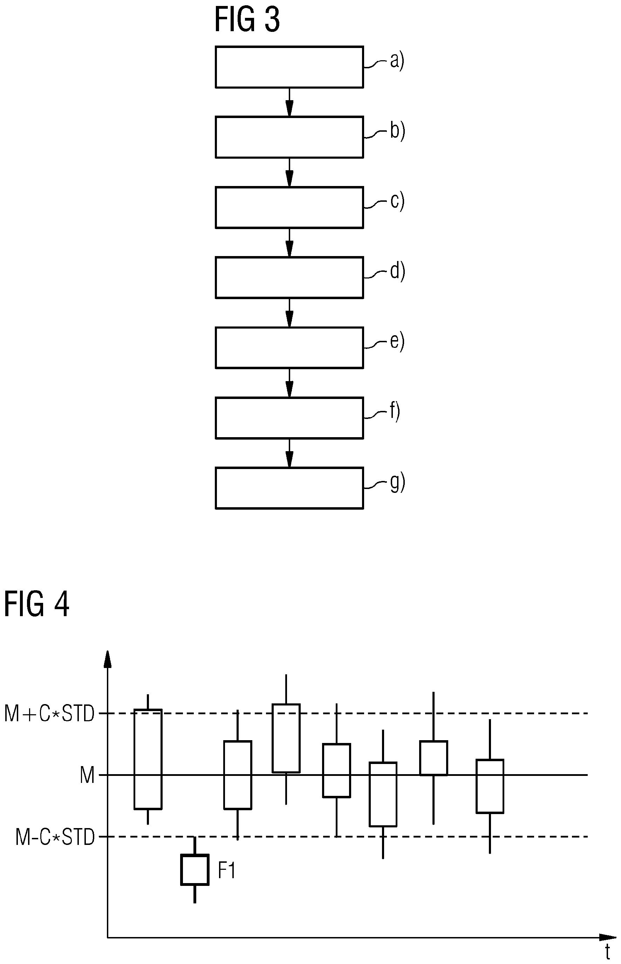

**Fig. 2** und **Fig. 3** zeigen schematisch die Abläufe des erfindungsgemäßen Verfahrens und ein entsprechendes Flussdiagramm, basierend auf dem System der vorhergehenden Figur.

Folgende Schritte werden vom System ausgeführt:

a) Bereitstellen eines trainierten Basis-Modells BM für den Betrieb des technischen Geräts TD1-TD3 an den Server S,
b) Bereitstellen eines vordefinierten Wertebereichs für einen zulässigen Fehler des Basis-Modells BM an den Server S,
c) Übermitteln des Basis-Modells BM vom Server S an den ersten Klienten C1,
d) Trainieren TR des Basis-Modells BM durch den ersten Klienten C1, und Übermitteln als erstes Klienten-Modell CM1 an den Server S,
e) Berechnen DET eines ersten statistischen Fehler-Indikators für das erste Klienten-Modell CM1, durch den Server S,
f) Prüfen PR, ob der erste statistische Fehler-Indikator innerhalb des vordefinierten Wertebereichs liegt, durch den Server S,

I. Wenn Ja, dann Aggregieren des ersten Klienten-Modells CM1 in das Basis-Modell BM als globales Modell GM,
II. Wenn Nein, optionales Benachrichtigen FB des ersten Klienten C1, dass das erste Klienten-Modell CM1 in der Modell-Bildung nicht verwendet wurde,

g) Bereitstellen des globalen Modells GM an den ersten Klienten C1 als lokales Modell LM, und Betreiben des technischen Geräts TD1 mit dem lokalen Modell LM.

Der erste statistische Fehler-Indikator kann durch einen Mittelwert oder ein Konfidenz-Intervall von Parametern des ersten Klienten-Modell CM1 gebildet sein.

Der erste und/oder der zweite statistische Fehler-Indikator kann jeweils mithilfe eines Dice-Ähnlichkeitskoeffizienten, einer Genauigkeit, einer Präzision oder eines F-Maßes (engl. "F1-score") bestimmt werden.

Der Dice-Score, auch Dice-Ähnlichkeitskoeffizient genannt, ist ein Maß für die Ähnlichkeit zwischen zwei Datensätzen.

Genauigkeit ist im Allgemeinen ein Maß für die Nähe einiger Messungen zu einem bestimmten Wert, während Präzision die Nähe der Messungen zueinander ist.

Außerdem werden folgende Schritte ausgeführt:

a1) Übermitteln des Basis-Modells BM vom Server S jeweils an die zwei zweiten Klienten C2, C3,
a2) Trainieren TR des Basis-Modells BM jeweils durch einen Klienten der zwei zweiten Klienten C2, C3, und Übermitteln der jeweiligen trainierten Modelle als jeweiliges zweites Klienten-Modell CM1, CM2 an den Server S,
a3) Berechnen eines jeweiligen zweiten statistischen Fehler-Indikators für das jeweilige zweite Klienten-Modell CM1, CM2, durch den Server S,
a4) Berechnen des Wertebereichs für den zulässigen Fehler des Basis-Modells BM aus Schritt b) aus den zumindest zwei zweiten statistischen Fehler-Indikatoren, durch den Server S.

Die zwei zweiten statistischen Fehler-Indikatoren können jeweils durch einen Mittelwert oder ein Konfidenz-Intervall von Parametern des jeweiligen zweiten Klienten-Modells gebildet werden.

Die zwei zweiten Klienten-Modelle CM1, CM2 werden mit dem bereitgestellten Basis-Modell BM aus Schritt a) aggregiert.

**Fig. 4** zeigt eine Darstellung für Wertebereiche von Klienten-Modellen.

Es werden mehrere Klienten-Modelle über die Zeit gebildet.

Für die Parameter dieser Klienten-Modelle können statistische Fehler-Indikatoren berechnet werden, beispielsweise um einen Median M mit einer Schwankungsbreite der Standardabweichung STD, welche mit einer Konstanten C multipliziert wird.

Ein Klienten-Modell, welches beispielsweise ein F-Maß F1 aufweist, welches jedoch außerhalb der Schwankungsbreite, also einem vorbestimmten Wertebereich liegt, wird als unzureichend für eine weitere Verwendung und Aggregation in einem globalen Modell erkannt und dementsprechend nicht verwendet.

Der dazugehörige Klient, von welchem das Klienten-Modell stammt, wird über diese Zurückweisung informiert.

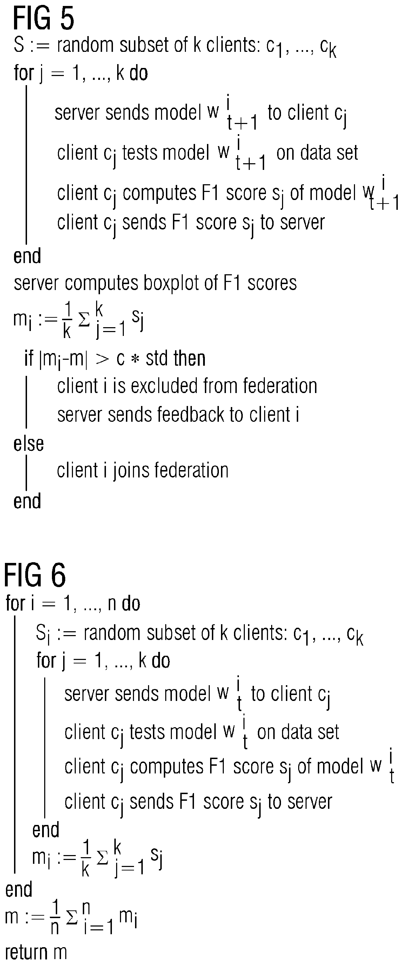

**Fig. 5** zeigt ein Ausführungsbeispiel für einen Pseudo-Programmcode für das erfindungsgemäße Verfahren.

Es wird ein Mittelwert M, eine Standardabweichung STD von Modell-Daten bereitbestellt, sowie die Anzahl an Klienten k.

Ein Klient, hier als $C_i$ bezeichnet, registriert sich zum föderierten Lernen in einer Kommunikations-Runde, hier als $r_t$ bezeichnet, mit dem Server S.

Der Server S sendet das Basis-Modell BM, hier als $w_t$ bezeichnet, zum Klienten $C_i$.

Der Klient $C_i$ trainiert das Modell $w_t$ mit einem Datensatz.

Dann sendet der Klient $C_i$ das trainierte Modell $w_{t+1}$ an den Server S.

Im Server startet die Erkennung mit dem gezeigten Programmcode, ob das Modell des Klienten $C_i$ eine ausreichende Leistung aufweist.

**Fig. 6** zeigt ein Ausführungsbeispiel für einen Pseudo-Programmcode zur Erkennung von Klienten mit niedriger Leistung.

Es werden Klienten-Modelle $w_t^i$ der Klienten $C_{1,...,n}$ in der Kommunikations-Runde $r_t$ bereitgestellt und ein Erkennungs-Parameter $m$ bestimmt.

**Bezugszeichenliste:**

| | |
|---|---|
| BM | Basis-Modell |
| C | Konstante |
| C1-C3 | Klient |
| CM1-CM3 | Klienten-Modell |
| DET | Erkennung von niedrig performanten Klienten |
| F1 | F-Maß |
| FB | Feedback |
| K | Anzahl an Klienten |
| LM | lokales Modell |
| PR | Prüfung |
| M | Median |
| S | Server |
| STD | Standardabweichung |
| T | Zeit |
| TD1-TD3 | technisches Gerät |
| TR | Modell-Training am Klient |

**Patentansprüche**

1. Computer-implementiertes Verfahren zum Betrieb eines technischen Geräts (TD1) durch ein System, umfassend einen Server (S), einen ersten Klienten (C1), mit einem Modell auf Basis künstlicher Intelligenz, wobei folgende Schritte ausgeführt werden:

   a) Bereitstellen eines trainierten Basis-Modells (BM) für den Betrieb des technischen Geräts (TD1-TD3) an den Server (S),
   b) Bereitstellen eines vordefinierten Wertebereichs für einen zulässigen Fehler des Basis-Modells (BM) an den Server (S),
   c) Übermitteln des Basis-Modells (BM) vom Server (S) an den ersten Klienten (C1),
   d) Trainieren (TR) des Basis-Modells (BM) durch den ersten Klienten (C1), und Übermitteln als erstes Klienten-Modell (CM1) an den Server (S),
   e) Berechnen eines ersten statistischen Fehler-Indikators für das erste Klienten-Modell (CM1), durch den Server (S),
   f) Prüfen (PR), ob der erste statistische Fehler-Indikator innerhalb des vordefinierten Wertebereichs liegt, durch den Server (S),

   I. Wenn Ja, dann Aggregieren des ersten Klienten-Modells (CM1) in das Basis-Modell (BM) als globales Modell (GM),
   II. Wenn Nein, optionales Benachrichtigen (FB) des ersten Klienten (C1), dass das erste Klienten-Modell (CM1) in der Modell-Bildung nicht verwendet wurde,

   g) Bereitstellen des globalen Modells (GM) an den ersten Klienten (C1) als lokales Modell (LM), und Betreiben des technischen Geräts (TD1) mit dem lokalen Modell (LM).

2. Verfahren nach dem vorhergehenden Anspruch, wobei der erste statistische Fehler-Indikator durch einen Mittelwert oder ein Konfidenz-Intervall von Parametern des ersten Klienten-Modell (CM1) gebildet ist.

3. Verfahren nach einem der vorhergehenden Ansprüche, wobei der erste und/oder der zweite statistische Fehler-Indikator mithilfe eines Dice-Ähnlichkeitskoeffizienten, einer Genauigkeit, einer Präzision oder eines F-Maßes bestimmt wird.

4. Verfahren nach einem der vorhergehenden Ansprüche, wobei das System ferner zumindest zwei zweiten Klienten (C2, C3) umfasst, und folgende Schritte ausgeführt werden:

   a1) Übermitteln des Basis-Modells (BM) vom Server (S) jeweils an die zumindest zwei zweiten Klienten (C2, C3),
   a2) Trainieren (TR) des Basis-Modells (BM) jeweils durch einen Klienten der zumindest zwei zweiten Klienten (C2, C3), und Übermitteln der jeweiligen trainierten Modelle als jeweiliges zweites Klienten-Modell (CM1, CM2) an den Server (S),

a3) Berechnen eines jeweiligen zweiten statistischen Fehler-Indikators für das jeweilige zweite Klienten-Modell (CM1, CM2), durch den Server (S),

a4) Berechnen des Wertebereichs für den zulässigen Fehler des Basis-Modells (BM) aus Schritt b) aus den zumindest zwei zweiten statistischen Fehler-Indikatoren, durch den Server (S).

5. Verfahren nach dem vorhergehenden Anspruch, wobei die zumindest zwei zweiten statistischen Fehler-Indikatoren jeweils durch einen Mittelwert oder ein Konfidenz-Intervall von Parametern des jeweiligen zweiten Klienten-Modells gebildet ist.

6. Verfahren nach Anspruch 4 oder 5, wobei die zumindest zwei zweiten Klienten-Modelle (CM1, CM2) mit dem bereitgestellten Basis-Modell (BM) aus Schritt a) aggregiert werden.

7. System zum Betrieb eines technischen Geräts (TD1), umfassend einen Server (S), einen ersten Klienten (C1), mit einem Modell auf Basis künstlicher Intelligenz, wobei die Verfahrensschritte nach einem der Ansprüche 1 bis 3 ausgeführt werden.

8. System nach dem vorhergehenden Anspruch, wobei ferner zumindest zwei zweiten Klienten (C2, C3) umfasst sind, und die Verfahrensschritte nach einem der Ansprüche 4 bis 6 ausgeführt werden.

9. Computer-Programm-Produkt mit darin gespeicherten maschinenlesbaren Anweisungen, die, wenn sie von einer Verarbeitungseinheit ausgeführt werden, diese veranlassen, das Verfahren nach einem der Ansprüche 1 bis 6 auszuführen.

## FIG 1

## FIG 2

# FIG 3

a)

b)

c)

d)

e)

f)

g)

# FIG 4

M+C∗STD

M

M−C∗STD

F1

t

## FIG 5

$S :=$ random subset of k clients: $c_1, ..., c_k$

for $j = 1, ..., k$ do

    server sends model $w^i_{t+1}$ to client $c_j$

    client $c_j$ tests model $w^i_{t+1}$ on data set

    client $c_j$ computes F1 score $s_j$ of model $w^i_{t+1}$

    client $c_j$ sends F1 score $s_j$ to server

end

server computes boxplot of F1 scores

$$m_i := \frac{1}{k} \Sigma^k_{j=1} s_j$$

  if $|m_i - m| > c * std$ then

    client i is excluded from federation

    server sends feedback to client i

  else

    client i joins federation

end

## FIG 6

for $i = 1, ..., n$ do

    $S_i :=$ random subset of k clients: $c_1, ..., c_k$

    for $j = 1, ..., k$ do

        server sends model $w^i_t$ to client $c_j$

        client $c_j$ tests model $w^i_t$ on data set

        client $c_j$ computes F1 score $s_j$ of model $w^i_t$

        client $c_j$ sends F1 score $s_j$ to server

    end

    $m_i := \frac{1}{k} \Sigma^k_{j=1} s_j$

end

$$m := \frac{1}{n} \Sigma^n_{i=1} m_i$$

return m

Europäisches
Patentamt

European
Patent Office

Office européen
des brevets

# EUROPÄISCHER RECHERCHENBERICHT

Nummer der Anmeldung

EP 23 17 9012

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | QIN YANG ET AL: "A Selective Model Aggregation Approach in Federated Learning for Online Anomaly Detection", 2020 INTERNATIONAL CONFERENCES ON INTERNET OF THINGS (ITHINGS) AND IEEE GREEN COMPUTING AND COMMUNICATIONS (GREENCOM) AND IEEE CYBER, PHYSICAL AND SOCIAL COMPUTING (CPSCOM) AND IEEE SMART DATA (SMARTDATA) AND IEEE CONGRESS ON CYBERMATICS (CYBERMATICS, 1. November 2020 (2020-11-01), Seiten 684-691, XP093098220, DOI: 10.1109/iThings-GreenCom-CPSCom-SmartData-Cybermatics50389.2020.00119 ISBN: 978-1-7281-7647-5 * Zusammenfassung * * Seite 678 - Seite 681 * * V. * ----- | 1-9 | INV. G06N3/02 G06N3/098 |
| X | WANG YUAO ET AL: "Model Poisoning Defense on Federated Learning: A Validation Based Approach", 19. Dezember 2020 (2020-12-19), TOPICS IN CRYPTOLOGY - CT-RSA 2020 : THE CRYPTOGRAPHERS' TRACK AT THE RSA CONFERENCE 2020, SAN FRANCISCO, CA, USA, FEBRUARY 24-28, 2020, PAGE(S) 207 - 223, XP047573515, * Zusammenfassung * * Seite 207 - Seite 214 * * Abbildungen 1-3 * * Algorithmus 1 * ----- -/-- | 1-9 | RECHERCHIERTE SACHGEBIETE (IPC) G06N |

Der vorliegende Recherchenbericht wurde für alle Patentansprüche erstellt

| Recherchenort | Abschlußdatum der Recherche | Prüfer |
|---|---|---|
| Den Haag | 6. November 2023 | Keresztury, Bence |

EPO FORM 1503 03.82 (P04C03)

Europäisches
Patentamt

European
Patent Office

Office européen
des brevets

# EUROPÄISCHER RECHERCHENBERICHT

**Nummer der Anmeldung**

**EP 23 17 9012**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2023/101741 A1 (YOO YOUNGJIN [US] ET AL) 30. März 2023 (2023-03-30) * Zusammenfassung * * Abbildungen 1-4 * * Absatz [0001] – Absatz [0048] * ----- | 1-9 | |
| A | SHAMBHAT VISHRUTH ET AL: "A Study on Criteria for Training Collaborator Selection in Federated Learning", 15. Juli 2022 (2022-07-15), 20220715, PAGE(S) 470 – 480, XP047628642, [gefunden am 2022-07-15] * das ganze Dokument * ----- | 1-9 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 6. November 2023 | Keresztury, Bence |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 17 9012

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-11-2023

| Im Recherchenbericht angeführtes Patentdokument | Datum der Veröffentlichung | Mitglied(er) der Patentfamilie | Datum der Veröffentlichung |
|---|---|---|---|
| US 2023101741 A1 | 30-03-2023 | CN 115879564 A | 31-03-2023 |
| | | EP 4160488 A1 | 05-04-2023 |
| | | US 2023101741 A1 | 30-03-2023 |

EPO FORM P0461

Für nähere Einzelheiten zu diesem Anhang : siehe Amtsblatt des Europäischen Patentamts, Nr.12/82